# FASCICULE DE BREVET EUROPEEN

(11) **EP 3 356 168 B1**
(45) Date de publication et mention de la délivrance du brevet: **12.08.2020**
(21) Numéro de dépôt: 16829408.0
(22) Date de dépôt: 09.12.2016
(51) Int. Cl.: B60J 1/17

(54) **DISPOSITIF VITRÉ AFFLEURANT POUR PORTE DE VÉHICULE À PANNEAU MOBILE, PORTE ET VÉHICULE AUTOMOBILE CORRESPONDANTS**
FLÄCHENBÜNDIGE VERGLASTE VORRICHTUNG FÜR EINE FAHRZEUGTÜR MIT EINER BEWEGLICHEN PLATTE, SOWIE ENTSPRECHENDE TÜR UND KRAFTFAHRZEUG
FLUSH-FITTED GLAZED DEVICE FOR A VEHICLE DOOR COMPRISING A MOVABLE PANEL, AND CORRESPONDING DOOR AND MOTOR VEHICLE

(43) Date de publication de la demande: 08.08.2018
(73) Titulaire: Advanced Comfort Systems France SAS - ACS France, 79302 Bressuire Cedex (FR)
(72) Inventeur: CHARGE, Philippe, 79300 Bressuire (FR)
(74) Mandataire: Vidon Brevets & Stratégie
(86) Numéro de dépôt international: PCT/FR2016/053320
(87) Numéro de publication internationale: WO 2018/104592

(56) Documents cités:
- EP-A1- 0 381 552
- EP-A2- 0 158 274
- EP-A2- 0 188 212
- EP-A2- 0 292 960
- FR-A1- 2 518 025
- FR-A1- 2 692 527
- GB-A- 2 133 448

## Description

### 1. Domaine de l'invention

Le domaine de l'invention est celui des véhicules automobiles.

Plus précisément, l'invention concerne les portes de véhicule, et en particulier l'équipement de baies ménagées dans de telles portes.

Plus précisément encore, l'invention concerne les portes de véhicule équipées d'au moins un panneau vitré mobile sensiblement verticalement, notamment pour passer d'une position fermée à une position ouverte dans laquelle il pénètre intégralement ou partiellement dans un caisson inférieur de carrosserie (le panneau mobile pouvant, bien sûr, prendre généralement, une pluralité de positions intermédiaires).

Une telle porte de véhicule peut notamment être une porte latérale, mais l'invention peut également s'appliquer, par exemple, aux portes battantes et/ou coulissantes d'un véhicule, y compris les portes arrière, les hayons...

L'invention concerne en particulier un dispositif vitré, destiné à être assemblé à un caisson de carrosserie pour former une porte de véhicule, sur lequel la surface vitrée est affleurant, c'est-à-dire selon lequel aucun cadre n'apparaît vu de l'extérieur.

### 2. Art antérieur

Des exemples de tels dispositifs vitrés sont décrits notamment dans les documents de brevet EP 1 422 091 et EP 1 612 072, et dans les documents GB2133448A^{,} EP0381552A1, FR2518025A1, EP0158274A2 et EP0292960A2.

Selon cette approche, une structure de porte et un ensemble vitre sont fabriqués séparément et assemblés par superposition pour former une porte de véhicule.

L'ensemble vitré 12 comprend un cadre, destiné à être orienté vers l'intérieur du véhicule, portant un ou plusieurs (classiquement deux) rails 22_{A}, 22_{B}, coopérant avec des patins solidaires du panneau vitré 121 mobile, et fixés sur la face de celui-ci orientée vers l'intérieur du véhicule.

Cette technique est intéressante, car elle permet de concevoir des designs originaux, du fait de la suppression du cadre de porte classique, tout en conservant un guidage et un maintien efficaces du panneau mobile.

Une version améliorée de cette approche est proposée dans le document de brevet FR 3 021 254, au nom du déposant de la présente demande de brevet, et qui décrit un réglage simple et efficace des patins, permettant d'obtenir un guidage précis et prédéterminé du panneau mobile, assuré par les rails et les patins, malgré les tolérances relativement importantes pouvant exister, d'un véhicule à l'autre.

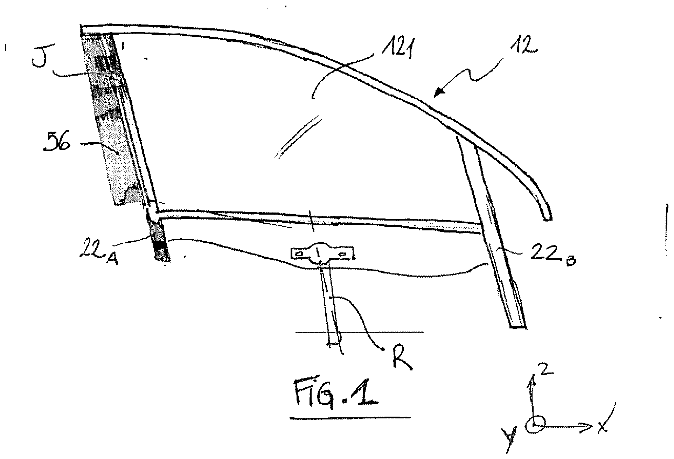

Toutefois, d'autres problèmes de montage, d'assemblage et de guidage peuvent apparaître, notamment du fait de la position du panneau vitré 121 mobile par rapport à l'élément enjoliveur 56 placé sur le cadre de l'ensemble vitré 12, comme illustré sur la figure 1, et s'étendant dans le plan du panneau vitré mobile 121 lorsqu'il est dans la position fermée.

La position de l'enjoliveur 56 et/ou du panneau vitré 121 doit tenir compte des tolérances et des jeux de fabrication et de fonctionnement, mais ceux-ci ne sont pas toujours compatibles avec un jeu supplémentaire selon la direction longitudinale du véhicule (direction X) pour le déplacement du panneau vitré 121.

Il peut être nécessaire, par exemple, de compenser les défauts de parallélisme entre les rails de guidage du panneau vitré 121 et le rail R du lève-vitre lors des montées/descentes du panneau vitré 121, lorsque les rails de guidage du panneau vitré 121 et le rail R du lève-vitre ne sont pas assemblés sur le même poste.

Il existe donc un besoin de contrôler la position en X du panneau vitré 121, et de garantir que son guidage s'effectue sans jeu de sorte à conserver un jeu J minimal entre les parties supérieure et inférieure (selon l'axe Z correspondant à la hauteur du véhicule) de l'enjoliveur 56 et le bord du panneau vitré 121.

### 3. Objectifs de l'invention

L'invention a notamment pour objectif de pallier à cet inconvénient.

Plus précisément, un objectif de l'invention est de fournir un dispositif vitré pour la réalisation d'une porte de véhicule, qui permette un guidage simple et efficace du panneau vitré, sans jeu ou à jeu très réduit dans la direction X.

L'invention a pour objectif de fournir une porte de véhicule présentant un aspect affleurant en elle-même et avec les carrosseries, et qui présente une bonne qualité de structure et d'étanchéité.

Un autre objectif de l'invention est de fournir un tel dispositif vitré qui soit simple à mettre en œuvre et à assembler, par exemple, sur une chaîne de montage.

Encore un autre objectif de l'invention est de fournir un tel dispositif vitré, qui puisse être aisément maintenu ou remplacé, par exemple, suite à un accident.

### 4. Exposé de l'invention

Cet objectif, ainsi que d'autres qui apparaîtront par la suite, sont atteints à l'aide d'un dispositif vitré destiné à être assemblé à un caisson de carrosserie pour former une porte de véhicule automobile selon la revendication 1, le dispositif comprenant au moins un panneau vitré mobile portant, sur sa face orientée vers l'intérieur du véhicule, au moins deux patins de guidage montés chacun coulissant par rapport à un rail de guidage.

Selon l'invention, le dispositif vitré comprend une butée de blocage du panneau vitré dans la direction longitudinale au moins dudit véhicule, ladite butée de blocage étant solidaire d'un premier rail de guidage.

Dans un mode de réalisation particulier, un desdits rails porte la butée de blocage du panneau vitré dans la direction longitudinale au moins dudit véhicule.

Dans une variante, la butée de blocage est portée par un enjoliveur disposé à proximité d'un bord latéral du panneau vitré, l'enjoliveur étant porté par un desdits rails.

Ainsi, cette butée bloque tout déplacement en X du panneau vitré, sans s'opposer au coulissement de ce dernier. Bien sûr, le blocage n'existe que dans la direction X, et elle autorise un guidage dans la direction Z (hauteur du véhicule) et le cas échéant dans la direction transversale Y (correspondant à la largeur du véhicule). Il s'agit donc d'une « butée de blocage en X et de guidage en Z et le cas échéant en Y », appelée ici « butée de blocage » par simplification.

Ainsi, il est possible d'avoir un déplacement précis du panneau vitré, et donc de conserver un jeu minimal entre les parties supérieure et inférieure (selon l'axe Z) d'un enjoliveur disposé à proximité d'un bord latéral du panneau vitré, pour chaque dispositif et chaque porte, malgré les tolérances nécessaires pour la fabrication et le montage des véhicules.

On notera ici que le dispositif vitré de l'invention met en œuvre deux rails, par exemple l'un à l'avant et l'autre arrière, pour un dispositif destiné à être monté sur une portière ou une paroi latérale d'un véhicule.

Un seul de ces rails est équipé d'une telle butée de blocage en X selon l'invention, par exemple à l'arrière pour une porte avant, ou à l'avant pour une porte arrière.

Cette butée de blocage en X est située au voisinage de la partie inférieure du rail de guidage et solidaire de ce dernier de façon que le panneau vitré mobile soit mis en contrainte contre cette butée lors de son déplacement.

Il est à noter que la butée de blocage en X ne sert à garantir le jeu entre le panneau vitré et l'enjoliveur que lorsque le panneau vitré est fermé. Lorsque le panneau vitré est ouvert ou partiellement ouvert, le contact entre le panneau vitré et la butée de blocage en X n'est pas obligatoire. Dans certains cas, le panneau vitré s'éloigne légèrement de la butée de blocage en X lors de la descente et s'en rapproche lors de la montée, dans d'autres cas, le panneau vitré est toujours en contact avec la butée de blocage en X. Ce phénomène est lié à la forme des vitres et à leurs trajectoires.

Selon un aspect particulier de l'invention, ladite butée de blocage présente au moins une surface de blocage d'un bord latéral du panneau vitré.

Selon un aspect particulier de l'invention, ladite butée de blocage présente une première surface de blocage s'étendant selon la direction transversale dudit véhicule.

Selon un mode de réalisation particulier, ladite butée de blocage présente une deuxième surface de blocage s'étendant selon la direction longitudinale dudit véhicule de sorte à permettre un déplacement du panneau vitré sans jeu ou à jeu réduit dans la direction transversale dudit véhicule.

La butée de blocage permet un déplacement du panneau vitré sans jeu ou à jeu très réduit dans la direction Y.

Ceci permet d'éviter que le panneau vitré mobile ne se décale vers l'extérieur et le cas échéant l'intérieur du véhicule.

Ce blocage Y en partie basse du panneau vitré permet de compenser l'action des joints d'étanchéité, qui ont tendance à pousser le panneau vitré vers l'extérieur.

Sans cette butée de blocage en Y, la poussée des joints ferait ressortir le panneau vitré en Y par rapport à l'enjoliveur.

Selon un aspect particulier de l'invention, ladite butée de blocage présente une troisième surface de blocage s'étendant selon la direction longitudinale dudit véhicule et sensiblement parallèle à la deuxième surface de blocage, les surfaces de blocage délimitant une fente dans laquelle est logé le bord latéral du panneau vitré.

Selon un aspect particulier de l'invention, un deuxième rail de guidage porte une butée de blocage du panneau vitré dans la direction transversale dudit véhicule .

Selon l'invention, le premier rail de guidage porte un élément enjoliveur dont un bord s'étend sensiblement parallèlement audit bord latéral du panneau vitré.

Selon un aspect particulier de l'invention, au moins un desdits rails de guidage présente une section essentiellement circulaire, le ou lesdits patins correspondant présentant également une section essentiellement circulaire.

Cette forme cylindrique peut notamment faciliter le montage et tolérer des jeux.

D'autres sections des rails et des patins respectivement, par exemple rectangulaires ou carrés, sont également possibles.

Selon un aspect particulier de l'invention, au moins une desdites surfaces de blocage est recouverte d'un revêtement de glissement. Il peut s'agir d'une couche de revêtement d'un matériau à faible coefficient de frottement, par exemple en polyoxyméthylène.

L'invention concerne également les portes de véhicule automobile, comprenant un dispositif vitré tel que décrit ci-dessus, ainsi que les véhicules automobiles comprenant au moins un tel dispositif vitré.

### 5. Exposé des figures

D'autres caractéristiques et avantages de l'invention apparaîtront plus clairement à la lecture de la description suivante des modes de réalisation de l'invention, donnée à titre de simples exemples illustratifs et non limitatifs et des dessins annexés parmi lesquels :
- la figure 1 est une vue générale d'un dispositif vitré selon l'invention destiné à être assemblé à un caisson de porte pour former une portière avant de véhicule automobile ;
- la figure 2 est une vue détaillée d'un dispositif vitré selon l'invention présentant deux patins ;
- la figure 3 est une vue de détail de la butée de blocage en X de la position du panneau vitré mobile du dispositif vitré selon l'invention ;
- la figure 4 est une vue en coupe AA d'une portion de la figure 3, et présente un premier mode de mise en œuvre de la butée de blocage dans deux directions ;
- la figure 5 est une vue en coupe BB d'une portion de la figure 2 ;
- la figure 6 présente un deuxième mode de mise en œuvre de la butée de blocage dans trois directions.

### 6. Description détaillée de modes de réalisation

L'invention concerne donc une porte de véhicule automobile, et, en particulier, sa partie vitrée, qui est affleurante, c'est-à-dire qu'aucun cadre ou élément de cadre ne fait saillie vers l'extérieur du véhicule, par rapport au plan de cette partie vitrée.

Le mode de réalisation décrit ci-après concerne une porte latérale avant.

Cependant, bien sûr, la même approche peut être mise en œuvre sur d'autres portes d'un véhicule.

Cette porte comprend classiquement un caisson de porte, formant la structure de cette porte. Le caisson comprend un premier cadre supérieur, qui définit une ouverture, et qui est relié à une partie inférieure qui comprend notamment des éléments de réception et de maintien de la partie vitrée.

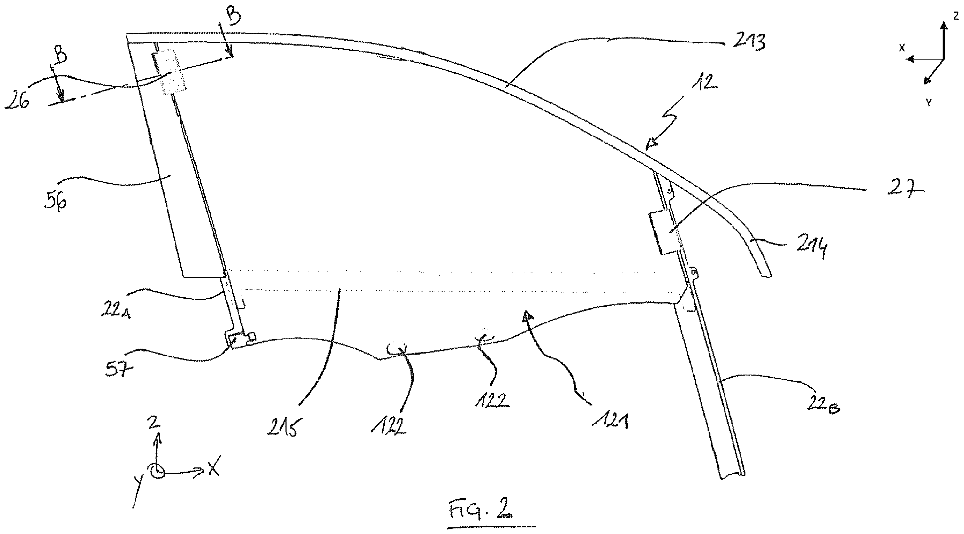

Cette partie vitrée, ou dispositif vitré, 12 est réalisée de façon indépendante, comme illustré par la figure 2, et assemblée ensuite au caisson, pour former la porte.

La partie vitré 12 est configuré de façon à offrir un aspect affleurant (flush en anglais).

Celle-ci comprend un panneau vitré mobile 121, pouvant être déplacé d'une position fermée vers une position ouverte. Sur la figure 2, la partie mobile est en position fermée.

Cette partie vitré 12 comprend un deuxième cadre qui présente sensiblement la même forme que le premier cadre de la structure de la porte.

Ce deuxième cadre présente une traverse supérieure 213 suivant la courbe de la partie supérieure de la partie vitrée et reliant deux montants chacun formé par un rail 22_{A}, 22_{B} de guidage en coulissement du panneau vitré 121 mobile, d'une traverse centrale 215, et d'un élément avant 214 destiné à être associé à une partie vitrée fixe (non illustrée).

On note que les rails 112_{A}, 112_{B} constituent des éléments structurants de la partie vitrée 12.

Le panneau vitré 121 mobile est entraîné en déplacement par des moyens d'entraînement (non illustrés), par exemple un mécanisme à crémaillère, actionné lui-même par un moteur électrique (non illustré). Ces moyens d'entraînement sont situés dans la partie inférieure du caisson de porte. D'autres moyens d'entraînement, y compris des moyens d'entraînement manuels, peuvent bien sûr être mis en œuvre.

Des patins de guidage sont fixés sur la face du panneau mobile 121 orienté vers l'intérieur du véhicule, pour coopérer avec les rails 22_{A}, 22_{B}. Bien que, en pratique, ils ne soient généralement pas visibles de l'extérieur (la zone correspondante étant sérigraphiée), on a fait apparaître sur la figure 2 leurs positions.

Dans ce mode de réalisation, un patin 26 unique de guidage en XY est prévu pour coopérer avec le rail 22_{A} orienté vers l'arrière, et un patin 27 unique de guidage en Y est prévu pour coopérer avec le rail 22_{B} orienté vers l'avant.

Le patin arrière 27 présente, selon ce mode de réalisation, une section essentiellement cylindrique. Le rail 22_{A} présente une forme complémentaire essentiellement cylindrique. Ainsi, les sections respectives du patin et du rail permettant une rotation du panneau mobile autour de l'axe Z. Cette forme cylindrique peut notamment faciliter le montage et tolérer des jeux.

Selon un mode de réalisation particulier, ledit patin est surmoulé sur un insert métallique.

Le surmoulage peut notamment être réalisé en polyoxyméthylène (POM).

La partie vitrée 12 est assemblée indépendamment du caisson de porte, puis monté sur ce dernier par fixation de la traverse supérieure 213 et des rails 22_{A}, 22_{B} sur le caisson.

On dispose alors d'une porte pouvant être montée directement sur le véhicule.

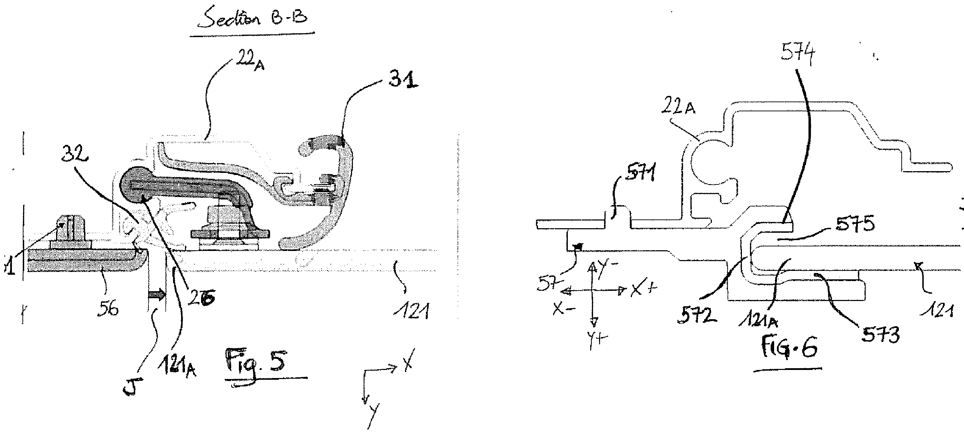

Le deuxième cadre peut porter plusieurs joints d'étanchéité 31, 32 (vue en coupe de la figure 5). Il reçoit également un élément enjoliveur, ou élément de finition, 56 s'étendant dans le plan du panneau vitré 121 mobile lorsque ce dernier est dans la position fermée.

Plus précisément, le rail 22A arrière de guidage reçoit un enjoliveur 56, qui est positionné de façon à être aligné avec le bord 121_{A} du panneau vitré 121 mobile tout en minimisant le jeu J avec ce dernier, pour des raisons esthétiques.

L'enjoliveur 56 présente plusieurs éléments de centrage 561 en saillie depuis sa face intérieure coopérant avec des lumières ménagées dans le rail 22_{A}. Il présente, en outre, des éléments de verrouillage (non visibles) afin de maintenir l'enjoliveur 56 en position sur le rail 22_{A} pendant l'utilisation du véhicule, et éviter qu'il ne se démonte sous l'effet de chocs ou vibrations. L'enjoliveur 56 peut en outre être aisément démonté.

L'enjoliveur 56 est monté directement sur le rail 22_{A} arrière de guidage contrairement aux enjoliveurs de dispositifs vitrés de l'art antérieur qui sont fixés sur la structure de porte du véhicule. Il peut être fixé sur le rail 22_{A} avant ou après le montage de la partie vitré 12 sur le caisson de porte du véhicule. L'assemblage de l'enjoliveur 56 sur la partie vitré 12 peut ainsi être effectué directement chez le fournisseur.

Dans le cas où les rails 22_{A}, 22_{B} de guidage de vitre et le rail de lève-vitre (non illustré mais solidaire des points de fixation 122 situés en partie inférieure du panneau vitré 121) ne sont pas assemblés sur le même poste, il est nécessaire de compenser les défauts de montage du lève-vitre en prévoyant une liaison vitre/lève-vitre permettant un mouvement relatif suivant au moins l'axe X.

Toutefois, ce degré de liberté nécessaire au bon fonctionnement du système ne permet pas d'assurer le jeu en X entre le panneau vitré 121 et l'enjoliveur 56 en partie basse (en partie haute, le jeu est garanti par le patin de guidage 26 en XY).

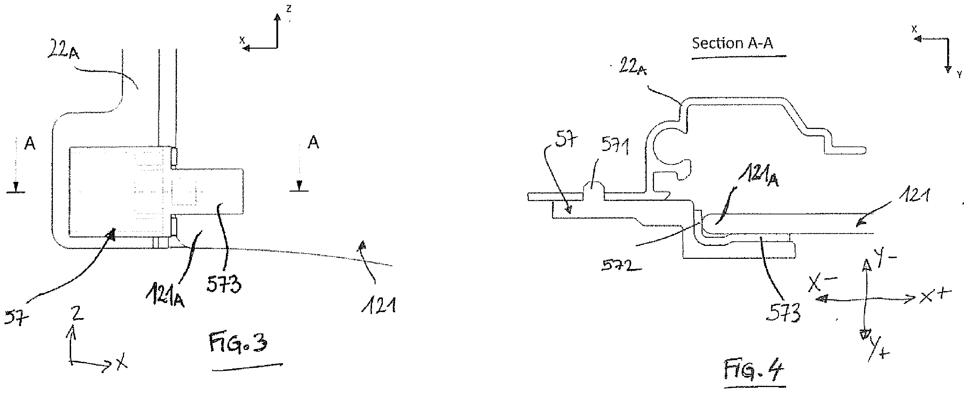

Comme illustré sur la figure 3 (vue de l'extérieur), l'invention prévoit que le rail 22_{A} arrière porte une butée de blocage 57 du panneau vitré 121 dans la direction longitudinale X du véhicule (et plus précisément dans la direction X-).

La butée de blocage 57 est montée sur le rail 22_{A} à proximité de l'extrémité inférieure de ce dernier. Cette butée de blocage 57 bloque tout déplacement en X du panneau vitré 121, sans s'opposer au coulissement en Z de ce dernier. En d'autres termes, cette butée de blocage 57 en X située en partie basse du rail 22_{A} bloque le mouvement en X du panneau vitré 121 par rapport au rail 22_{A} de guidage de vitre.

Comme l'illustre la figure 4, qui est une vue en coupe AA au niveau de la butée de blocage 57, cette dernière présente une première portion portant un élément de fixation 571 destiné à être encliqueté dans une lumière du rail 22_{A}. La première portion est prolongée par une deuxième portion qui recouvre le bord latéral 121_{A} arrière du panneau vitré 121, du côté extérieur.

Dans l'exemple illustré, cette deuxième portion comprend une première patte, disposée du côté extérieur du panneau vitré et dont la surface intérieure qui est tournée vers le panneau vitré 121, est en forme d'équerre.

La première patte présente une première surface de blocage 572 s'étendant selon la direction transversale Y du véhicule et contre laquelle la tranche du panneau vitré 121 vient en appui. Cette première surface de blocage 572 bloque tout déplacement en X du panneau vitré 121, ce qui permet de conserver un jeu minimal entre les parties supérieure et inférieure (selon l'axe Z) de l'enjoliveur 56 et le bord latéral 22_{A} arrière du panneau vitré 121.

La première patte présente en outre une deuxième surface de blocage 573 s'étendant selon la direction longitudinale X du véhicule et contre laquelle la surface extérieure du panneau vitré 121 vient en appui, de sorte à empêcher un déplacement du panneau vitré 121 vers l'extérieur dans la direction transversale Y du véhicule. Ce blocage en Y en partie basse du panneau vitré 121 permet de compenser l'action des joints d'étanchéité, qui ont tendance à pousser le panneau vitré 121 vers l'extérieur.

La butée de blocage 57 assure ainsi un blocage dans deux directions X- et Y+.

La figure 6 présente un deuxième mode de mise en œuvre de la butée de blocage 57. Cette dernière présente deux pattes définissant une fente 575 en U dans laquelle est logé le bord latéral 121_{A} arrière du panneau vitré 121, les pattes étant disposées du côté intérieur et du côté extérieur respectivement du panneau vitré 121. Cette fente 575 est délimitée par les première et deuxième surfaces de blocage 572, 573 et une troisième surface de blocage 574.

La troisième surface de blocage 574 s'étend selon la direction longitudinale X du véhicule, parallèlement à la deuxième surface de blocage 573. La distance entre les deuxième et troisième surface de blocage 573, 574, est légèrement supérieure à l'épaisseur du panneau vitré 121 de sorte à permettre un déplacement du panneau vitré 121 à jeu réduit dans la direction transversale Y du véhicule. Ceci empêche, par ailleurs, que le panneau vitré 121 mobile puise être décalé vers l'intérieur par une personne mal intentionnée, lorsqu'il est en position fermée.

La butée de blocage 57 assure ainsi un blocage dans trois directions X-, Y+ et Y-.

L'une au moins des surfaces de blocage 572 à 574 est revêtue d'une couche de matériau supplémentaire présentant un faible coefficient de frottement et une résistance élevée à l'usure, tel que le polyoxyméthylène.

Dans des variantes, il peut s'agir d'une couche de feutrine ou d'une bande polyuréthane.

Dans une autre variante, la butée 57 est une pièce mono-matière.

L'ensemble vitré peut également comprendre un ou plusieurs panneau(x) vitré(s) fixe(s), ou custode(s).

Dans un mode de réalisation particulier, le panneau vitré mobile porte, sur sa face orientée vers l'intérieur du véhicule, deux patins de guidage montés chacun coulissant par rapport à un rail de guidage.

Dans un autre mode de réalisation particulier, le panneau vitré mobile porte un unique patin de guidage coopérant avec un des deux rails de guidage dans lesquels coulisse le panneau vitré mobile.

De nombreux ajouts ou variantes au mode de réalisation décrit plus haut peuvent bien sûr être envisagés.

Les rails peuvent être configurés pour guider le panneau vitré mobile selon un mouvement de louvoiement et de coulissement, de façon à éloigner légèrement le panneau vitré mobile, lors de son déplacement, d'un cadre ou d'un montant contre lequel il est en appui, dans une position fermée.

Dans ce cas, au moins un des rails de guidage porte une rampe, assurant le louvoiement.

D'autres formes de butées peuvent bien sûr être utilisées sans sortir du cadre de l'invention. Dans tous les cas, elles permettent un blocage selon une direction au moins, en X et, le cas échéant en Y.

Par ailleurs, la butée de blocage 57 peut être portée par l'enjoliveur 56, lui-même étant monté sur le rail22_{A}.

## Revendications

1. Dispositif vitré (12) destiné à être assemblé à un caisson de carrosserie pour former une porte de véhicule automobile, comprenant au moins un panneau vitré (121) mobile portant, sur sa face orientée vers l'intérieur du véhicule, au moins deux patins de guidage (26, 27) montés chacun coulissant par rapport à un premier et deuxième rail de guidage (22_{A}, 22_{B}) respectivement, le dispositif vitré (12) comprenant une butée de blocage (57) du panneau vitré (121) dans la direction longitudinale (X) au moins dudit véhicule, ladite butée de blocage (57) étant solidaire du premier rail de guidage (22A, 22B), la butée de blocage (57) étant montée sur ledit premier rail de guidage (22_{A}, 22_{B}), le premier rail de guidage (22_{A}, 22_{B}) portant un élément enjoliveur (56) dont un bord s'étend sensiblement parallèlement audit bord latéral (121_{A}) du panneau vitré (121), ladite butée de blocage (57) étant portée par ledit élément enjoliveur (56).

2. Dispositif vitré (12) selon la revendication 1, **caractérisé en ce que** ladite butée de blocage (57) est montée à proximité de l'extrémité inférieure dudit premier rail de guidage (22_{A}, 22_{B}).

3. Dispositif vitré (12) selon la revendication 2, **caractérisé en ce que** ladite butée de blocage (57) comprend un élément de fixation (571) destiné à être encliqueté dans une lumière dudit premier rail de guidage (22_{A}, 22_{B}).

4. Dispositif vitré (12) selon l'une quelconque des revendications 1 à 3, **caractérisé en ce que** ladite butée de blocage (57) présente au moins une surface de blocage (572, 573, 574) d'un bord latéral (121_{A}) du panneau vitré (121).

5. Dispositif vitré (12) selon la revendication 4, **caractérisé en ce que** ladite butée de blocage (57) présente une première surface de blocage (572) s'étendant selon la direction transversale (Y) dudit véhicule.

6. Dispositif vitré (12) selon la revendication 5, **caractérisé en ce que** ladite butée de blocage (57) présente une deuxième surface de blocage (573) s'étendant selon la direction longitudinale (X) dudit véhicule de sorte à permettre un déplacement du panneau vitré (121) sans jeu ou à jeu réduit vers l'extérieur dans la direction transversale (Y) dudit véhicule.

7. Dispositif vitré (12) selon la revendication 6, **caractérisé en ce que** ladite butée de blocage (57) présente une troisième surface de blocage (574) s'étendant selon la direction longitudinale (X) dudit véhicule et sensiblement parallèle à la deuxième surface de blocage (573), les surfaces de blocage (572, 573, 574) délimitant une fente (575) dans laquelle est logé le bord latéral (121_{A}) du panneau vitré (121).

8. Dispositif vitré (12) selon l'une quelconque des revendications 1 à 7, **caractérisé en ce qu'**un deuxième rail de guidage (22_{A}, 22_{B}) porte une butée de blocage (57) du panneau vitré (121) dans la direction transversale (Y) dudit véhicule .

9. Dispositif vitré (12) selon l'une quelconque des revendications 1 à 8, **caractérisé en ce qu'**au moins un desdits rails de guidage (22_{A}, 22_{B}) présente une section essentiellement circulaire, le ou lesdits patins (26, 27) correspondant présentant également une section essentiellement circulaire.

10. Dispositif vitré (12) selon l'une quelconque des revendications 5 à 9, **caractérisé en ce qu'**au moins une desdites surfaces de blocage (572, 573, 574) est recouverte d'un revêtement de glissement.

11. Porte de véhicule automobile, **caractérisée en ce qu'**elle comprend un dispositif vitré (12) selon l'une quelconque des revendications 1 à 10.

12. Véhicule automobile, **caractérisé en ce qu'**il comprend au moins un dispositif vitré (12) selon l'une quelconque des revendications 1 à 10.

## Patentansprüche

1. Verglaste Vorrichtung (12), die dazu bestimmt ist, an einem Karosseriegehäuse montiert zu sein, um eine Kraftfahrzeugtür zu bilden, umfassend mindestens eine bewegliche Glasplatte (121), die auf ihrer zum Inneren des Fahrzeugs gewandten Seite mindestens zwei Führungsschuhe (26, 27) trägt, die jeweils gleitend in Bezug zu einer ersten bzw. zweiten Führungsschiene (22_{A}, 22_{B}) montiert sind,
wobei die verglaste Vorrichtung (12) einen Anschlag (57) zum Blockieren der Glasplatte (121) zumindest in Längsrichtung (X) des Fahrzeugs umfasst, wobei der Blockieranschlag (57) mit der Führungsschiene (22_{A}, 22_{B}) verbunden ist, wobei der Blockieranschlag (57) auf der ersten Führungsschiene (22_{A}, 22_{B}) montiert ist, wobei die erste Führungsschiene (22_{A}, 22_{B}) eine Zierleiste (56) trägt, deren Rand sich im Wesentlichen parallel zum Seitenrand (121_{A}) der Glasplatte (121) erstreckt, wobei der Blockieranschlag (57) von der Zierleiste (56) getragen wird.

2. Verglaste Vorrichtung (12) nach Anspruch 1, **dadurch gekennzeichnet, dass** der Blockieranschlag (57) in der Nähe des unteren Endes der ersten Führungsschiene (22_{A}, 22_{B}) montiert ist.

3. Verglaste Vorrichtung (12) nach Anspruch 2, **dadurch gekennzeichnet, dass** der Blockieranschlag (57) ein Befestigungselement (571) umfasst, das dazu bestimmt ist, in eine Öffnung der ersten Führungsschiene (22_{A}, 22_{B}) einzurasten.

4. Verglaste Vorrichtung (12) nach einem der Ansprüche 1 bis 3, **dadurch gekennzeichnet, dass** der Blockieranschlag (57) mindestens eine Fläche (572, 573, 574) zum Blockieren eines Seitenrandes (121_{A}) der Glasplatte (121) aufweist.

5. Verglaste Vorrichtung (12) nach Anspruch 4, **dadurch gekennzeichnet, dass** der Blockieranschlag (57) eine erste Blockierfläche (572) aufweist, die sich in Querrichtung (Y) des Fahrzeugs erstreckt.

6. Verglaste Vorrichtung (12) nach Anspruch 5, **dadurch gekennzeichnet, dass** der Blockieranschlag (57) eine zweite Blockierfläche (573) aufweist, die sich in Längsrichtung (X) des Fahrzeugs erstreckt, um eine Verschiebung der Glasplatte (121) ohne Spiel oder mit geringerem Spiel nach außen in Querrichtung (Y) des Fahrzeugs zu ermöglichen.

7. Verglaste Vorrichtung (12) nach Anspruch 6, **dadurch gekennzeichnet, dass** der Blockieranschlag (57) eine dritte Blockierfläche (574) aufweist, die sich in Längsrichtung (X) des Fahrzeugs und im Wesentlichen parallel zur zweiten Blockierfläche (573) erstreckt, wobei die Blockierflächen (572, 573, 574) einen Schlitz (575) begrenzen, in dem der Seitenrand (121_{A}) der Glasplatte (121) angeordnet ist.

8. Verglaste Vorrichtung (12) nach einem der Ansprüche 1 bis 7, **dadurch gekennzeichnet, dass** eine zweite Führungsschiene (22_{A}, 22_{B}) einen Anschlag (57) zum Blockieren der Glasplatte (121) in Querrichtung (Y) des Fahrzeugs trägt.

9. Verglaste Vorrichtung (12) nach einem der Ansprüche 1 bis 8, **dadurch gekennzeichnet, dass** mindestens eine der Führungsschienen (22_{A}, 22_{B}) einen im Wesentlichen kreisförmigen Querschnitt aufweist, wobei der oder die entsprechenden Schuhe (26, 27) auch einen im Wesentlichen kreisförmigen Querschnitt aufweisen.

10. Verglaste Vorrichtung (12) nach einem der Ansprüche 5 bis 9, **dadurch gekennzeichnet, dass** mindestens eine der Blockierflächen (572, 573, 574) mit einer Gleitbeschichtung bedeckt ist.

11. Kraftfahrzeugtür, **dadurch gekennzeichnet, dass** sie eine verglaste Vorrichtung (12) nach einem der Ansprüche 1 bis 10 umfasst.

12. Kraftfahrzeug, **dadurch gekennzeichnet, dass** es mindestens eine verglaste Vorrichtung (12) nach einem der Ansprüche 1 bis 10 umfasst.

## Claims

1. Glazed device (12) intended to be assembled in a bodywork chamber in order to form a motor vehicle door, comprising at least one movable glazed panel (121) carrying, on its face oriented towards the inside of the vehicle, at least two guide shoes (26, 27) each mounted so as to be able to slide with respect to a corresponding guide rail (22_{A}, 22_{B}),
the glazed device (12) comprising a stop (57) for blocking the glazed panel (121) in the longitudinal direction (X) at least of said vehicle, said blocking stop (57) being integral with the first guide rail (22_{A}, 22_{B}), the blocking stop (57) being mounted on said first guide rail (22_{A}, 22_{B}),
the first guide rail (22_{A}, 22_{B}) carrying a trim element (56), one edge of which extends substantially parallel to said lateral edge (121_{A}) of the glazed panel (121), said blocking stop (57) being carried by said trim element (56).

2. Glazed device (12) according to claim 1, **characterised in that** said blocking stop (57) is mounted in the vicinity of the bottom end of said first guide rail (22_{A}, 22_{B}) .

3. Glazed device (12) according to claim 2, **characterised in that** said blocking stop (57) comprises a fixing element (571) intended to be snapped into an aperture in said first guide rail (22_{A}, 22_{B}).

4. Glazed device (12) according to any one of claims 1 to 3, **characterised in that** said blocking stop (57) has at least one surface (572, 573, 574) blocking a lateral edge (121_{A}) of the glazed panel (121).

5. Glazed device (12) according to claim 4, **characterised in that** said blocking stop (57) has a first blocking surface (572) extending in the transverse direction (Y) of said vehicle.

6. Glazed device (12) according to claim 5, **characterised in that** said blocking stop (57) has a second blocking surface (573) extending in the longitudinal direction (X) of said vehicle so as to allow a movement of the glazed panel (121) without clearance or with small clearance in the transverse direction (Y) of said vehicle, towards the outside.

7. Glazed device (12) according to claim 6, **characterised in that** said blocking stop (57) has a third blocking surface (574) extending in the longitudinal direction (X) of said vehicle and substantially parallel to the second blocking surface (573), the blocking surfaces (572, 573, 574) delimiting a slot (575) in which the lateral edge (121_{A}) of the glazed panel (121) is housed.

8. Glazed device (12) according to any of claims 1 to 7, **characterised in that** a second guide rail (22_{A}, 22_{B}) carries a stop (57) for blocking the glazed panel (121) in the transverse direction (Y) of said vehicle.

9. Glazed device (12) according to any one of claims 1 to 8, **characterised in that** at least one of said guide rails (22_{A}, 22_{B}) has an essentially circular cross section, said corresponding shoe or shoes (26, 27) also having an essentially circular cross section.

10. Glazed device (12) according to any of claims 5 to 9, **characterised in that** at least one of said blocking surfaces (572, 573, 574) is covered with a slip covering.

11. Motor-vehicle door, **characterised in that** it comprises a glazed device (12) according to any of claims 1 to 10.

12. Motor vehicle, **characterised in that** it comprises at least one glazed device (12) according to any of claims 1 to 10.
